# EUROPÄISCHE PATENTSCHRIFT

(11) **EP 1 651 702 B1**
(45) Veröffentlichungstag und Bekanntmachung des Hinweises auf die Patenterteilung: **11.02.2009**
(21) Anmeldenummer: 04763183.3
(22) Anmeldetag: 13.07.2004
(51) Int. Cl.: C08G 65/40

(54) **POLYFORMALE UND COPOLYFORMALE MIT REDUZIERTER WASSERAUFNAHME, IHRE HERSTELLUNG UND VERWENDUNG**
POLYFORMALS AND COPOLYFORMALS WITH REDUCED WATER ABSORPTION, PRODUCTION AND USE THEREOF
POLYFORMALS ET COPOLYFORMALS A ABSORPTION D'EAU REDUITE, LEUR PRODUCTION ET LEUR UTILISATION

(30) Priorität: 25.07.2003 DE 10333928
(43) Veröffentlichungstag der Anmeldung: 03.05.2006
(73) Patentinhaber: Bayer MaterialScience AG, 51368 Leverkusen (DE)
(72) Erfinder: HEUER, Helmut-Werner, 47829 Krefeld (DE); WEHRMANN, Rolf, 47800 Krefeld (DE)
(86) Internationale Anmeldenummer: PCT/EP2004/007711
(87) Internationale Veröffentlichungsnummer: WO 2005/012379

(56) Entgegenhaltungen:
- US-A- 4 260 733
- US-A- 4 374 974
- US-A- 5 105 004
- PATENT ABSTRACTS OF JAPAN Bd. 010, Nr. 036 (C-328), 13. Februar 1986 (1986-02-13) & JP 60 188426 A (IDEMITSU KOSAN KK), 25. September 1985 (1985-09-25)
- PATENT ABSTRACTS OF JAPAN Bd. 015, Nr. 504 (C-0896), 19. Dezember 1991 (1991-12-19) & JP 03 221523 A (IDEMITSU KOSAN CO LTD), 30. September 1991 (1991-09-30)

## Beschreibung

Gegenstand der vorliegenden Erfindung sind Polyformale und Copolyformale mit reduzierter Wasseraufnahme, Verfahren zu deren Herstellung und deren Verwendung zur Herstellung bestimmter Produkte, sowie die daraus erhältlichen Produkte.

Aromatische Polycarbonate gehören zur Gruppe der technischen Thermoplaste. Sie zeichnen sich durch die Kombination der technologisch wichtigen Eigenschaften Transparenz, Wärmeformbeständigkeit und Zähigkeit aus. Zur Gewinnung hochmolekularer linearer Polycarbonate nach dem Phasengrenzflächenverfahren werden im Zweiphasengemisch die Alkalisalze von Bisphenolen mit Phosgen umgesetzt. Das Molekulargewicht kann durch die Menge an Monophenolen wie z.B. Phenol oder tert.-Butylphenol gesteuert werden. Bei diesen Umsetzungen entstehen praktisch ausschließlich lineare Polymere. Dies kann durch Endgruppenanalyse nachgewiesen werden. Aromatische Polycarbonate auf Basis von Bisphenol A werden insbesondere auch für die Herstellung von optischen Datenträgern verwendet. Sie können jedoch auch bis zu 0,34 Gew.-% Wasser aufnehmen, was sich ungünstig auf die Dimensionsstabilität von Datenträgern auswirkt. Für andere, insbesondere Außenanwendungen, stellt wiederum die Hydrolyse ein gewisses Problem dar. Das Problem der Hydrolysebeständigkeit besteht auch bei der Verwendung als heißdampfsterilisierbare Medizinartikel.

Es stellt sich, ausgehend vom Stand der Technik, daher schon lange die Aufgabe ein Material zu finden, welches die typischen Vorteile des Polycarbonats als technischer Thermoplast besitzt, ohne jedoch die oben genannten Nachteile aufzuweisen.

Es wurde nun überraschend gefunden, dass gewisse Polyformale und Copolyformale solche Materialien darstellen.

Aromatische Polyformale stellen ebenfalls transparente Thermoplaste dar, welche aus Bisphenolbausteinen aufgebaut werden. Im Unterschied zu Polycarbonaten besteht das Verknüpfungselement zwischen den Bisphenolbausteinen jedoch nicht aus Carbonateinheiten, sondern aus Vollacetaleinheiten. Stellt bei Polycarbonat Phosgen die Carbonatquelle zur Verknüpfung dar, so übernimmt bei Polyformalen z.B. Methylenchlorid bei der Polykondensation die Funktion der Quelle der Vollacetal-Verknüpfungseinheit. Man kann Polyformale deshalb auch als Polyacetale ansehen.

Die Herstellung von aromatischen Polyformalen kann im Unterschied zu Polycarbonat in homogener Phase aus Bisphenolen und Methylenchlorid in Gegenwart von Alkalihydroxiden erfolgen.

Methylenchlorid fungiert bei dieser Polykondensation gleichzeitig als Reaktand und als Lösungsmittel. Das Molekulargewicht kann wie bei der Polykondensation von Polycarbonat ebenfalls durch die eingesetzten Mengen an Monophenol gesteuert werden.

JP-A 60188426 beschreibt unter anderem Polyformale, in denen 1,1-Bis(-4-hydroxyphenyl)-cyclohexan als Diphenol verwendet wird, sowie deren Verwendung zur Herstellung von Audiodiscs und optischen Memory-Discs.

US-A 4,374,974 beschreibt lineare aromatische Polyformal-Zusammensetzungen und cyclische Polyformale zur Herstellung von transparenten Filmen mit verbesserter Kerbschlagzähigkeit. Als Diphenol zur Herstellung der Polyformale kann unter Anderem 1,1-Bis(-4-hydroxyphenyl)-cyclohexan eingesetzt werden.

In US-A 4,374,974 ist bereits ein Verfahren beschrieben, in dem ausgehend von speziellen Bisphenolen nach Umsetzung mit Methylenchlorid, lineare und cyclische Oligo- und Polyformale erhalten werden können. Nachteilig an den hierbei zu erhaltenden Materialien ist der mit mehreren Prozent relativ hohe Anteil an cyclischen Reaktionsprodukten, welche sich sehr nachteilig auf die Mechanik auswirken. Außerdem zeigen die beschriebenen Polyformale sehr ungünstige Quelleigenschaften in organischen Lösungsmitteln, wodurch ein nachträgliches Entfernen der unerwünschten cyclischen Bestandteile nahezu unmöglich ist.

In DE A 27 38 962 und DE A 28 19 582 werden weitere und ähnliche Polyformale und deren Verwendung als Überzüge oder Filme beschrieben, mit den oben genannten Nachteilen.

US-A 4,260,733 beschreibt ein Verfahren zur Herstellung von linearen Filmen aus aromatischen Polyformalen mit einem reduzierten Gehalt an aromatischen cyclischen Polyformalen. Als Diphenol wird unter anderem 1,1-Bis(-4-hydroxyphenyl)-cyclohexan genannt.

Keines der genannten Dokumente offenbart den am Cyclohexanring substituierten Rest der Formel B zur Keines der genannten Dokumente offenbart den am Cyclohexanring substituierten Rest der Formel B zur Herstellung der Polyformale. Es ist auch kein Hinweis zu entnehmen, dass die in JP-A 60188426, US-A 4,260,733 und US-A 4,374,974 beschriebenen Polyformale eine reduzierte Wasseraufnahme besitzen.

In EP A 0277 627 werden Polyformale auf Basis spezieller Bisphenole der Formel 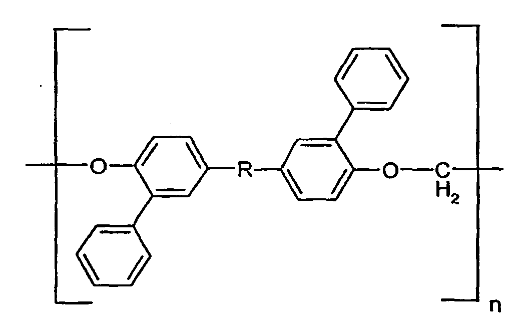 und deren mögliche Verwendung als Materialien für optische Instrumente beschrieben. In dieser Anmeldung wird die Substitution der Bisphenole an den Arylresten als zwingend beschrieben um die optische Anisotropie der Polyformale in einen für optische Anwendungen tauglichen Bereich zu zwingen.

Die im Stand der Technik vorbeschriebenen Polyformale und deren Eigenschaften bzw. deren Herstellungsverfahren sind jedoch unbefriedigend bzw. haben den Nachteil, dass die erreichbaren Reinheiten an linearem Polymer beschränkt sind. Die Materialien zeigen eine unzureichende Mechanik, was sich z.B. in einer erhöhten Sprödigkeit äußert.

Über die überraschend und außergewöhnlich niedrige Wasseraufnahme der Polyformale, welche die Polyformale als technische Materialien, insbesondere für optische Datenspeicher, besonders interessant macht, lehrt der Stand der Technik nichts.

Es bestand daher die Aufgabe, hochmolekulare Polyformale und Copolyformale und Verfahren zu deren Herstellung verfügbar zu machen, welche für bestimmte Anwendungen die aus dem Stand der Technik bekannten Nachteile vermeiden. Diese Aufgabe wird überraschenderweise durch den Einsatz von bestimmten Bisphenolen, sowie durch die dadurch zu erhaltenden erfindungsgemäßen Polyformale und Copolyformale bzw. deren Herstellungsverfahren gelöst.

Überraschenderweise wurde dabei auch gefunden, dass die Wasseraufnahme der erhaltenen Polyformale deutlich niedrigere Werte als der Stand der Technik bei Polycarbonaten aufweisen. Dies ist besonders für die Herstellung von Datenträgermaterialien, wie z.B. DVD und DVD-R und anderen Systemen mit hoher Speicherdichte, wie Blu-ray Disc (BD) und Advanced Optical Disc (AOD) sowie near-field optic von Bedeutung. Dadurch ist eine verbesserte Dimensionsstabilität möglich, welche beim Einsatz von blauen bzw. blau-grünen Lasern zunehmend wichtig wird. Durch die günstigen Lösungs- bzw. Quelleigenschaften der Materialien können ggf. anfallende cyclische Verunreinigungen fast quantitativ abgetrennt werden und liegen dann nur in der gleichen Größenordung wie bei heute gängigen Polycarbonattypen vor. Eine negative Beeinträchtigung der mechanischen Eigenschaften durch cyclische Verunreinigungen wird dadurch nahezu ausgeschlossen. Außerdem wurde überraschenderweise gefunden, dass sich durch geeignete Copolymerzusammensetzungen hohe Glastemperaturen von 130 - 170°C realisieren lassen, welche für den technischen Einsatz beispielsweise als optischer Datenträger oder heißdampfsterilisierbare Medizinartikel notwendig sind.

Für Vollacetale, als welche diese Polymere ja zu betrachten sind, vollkommen unerwartet zeigen diese Polyformale auch eine extreme Hydrolysestabilität bei höheren Temperaturen sowohl in alkalischem als auch in saurem Medium. Außerdem zeigt sich, dass die Polymere selbst im Kochtest in Wasser im Vergleich zu Polycarbonat erheblich stabiler sind.

Gegenstand der Erfindung ist daher die Verwendung linearer Polyformale bzw. Copolyformale zur Herstellung von optischen Datenträgern und Medizinartikeln, bzw. die Copolyformale selbst, basierend auf aromatischen Bisphenolen, dargestellt durch die allgemeinen Formeln (3a) und (3b), 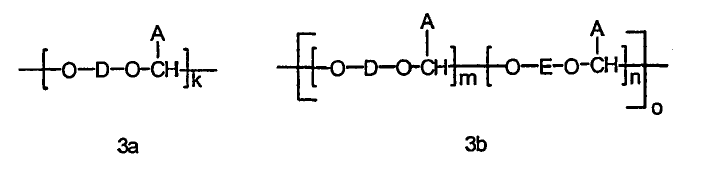 worin A für Wasserstoff oder Phenyl, bevorzugt für Wasserstoff steht, die Reste O-D-O und O-E-O für beliebige Diphenolatreste, in denen -E- und -D- unabhängig voneinander ein aromatischer Rest mit 6 bis 40 C-Atomen, bevorzugt 6 bis 21 C-Atomen, ist, der einen oder mehrere aromatische oder kondensierte, ggf. Heteroatome enthaltende aromatische Kerne enthalten kann und ggf. mit C₁-C₁₂-Alkylresten, bevorzugt mit C₁-C₈-Alkylresten, oder Halogen substituiert ist und aliphatische Reste, cycloaliphatische Reste, aromatische Kerne oder Heteroatome, bevorzugt aliphatische Reste oder cycloaliphatische Reste als Brückenglieder enthalten kann, wobei mindestens einer der Reste O-D-O und O-E-O für einen entsprechend, mindestens einfach am Cyclohexanring substituierten 1,1-Bis-(4-hydroxyphenyl)-cyclohexan Rest der Formel B 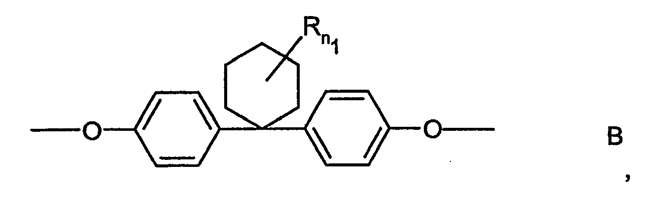 worin n₁ = 1 bis 10, bevorzugt 1 bis 5, besonders bevorzugt 1 bis 3, ganz besonders bevorzugt für 3 steht und R unabhängig voneinander für einen Alkyl-, Alkenyl-, Aryl- oder Halogenrest, bevorzugt für einen Alkylrest, besonders bevorzugt einen Alkylrest mit 1 bis 10 Kohlenstoffatomen, ganz besonders bevorzugt für einen Alkylrest mit 1 bis 5 Kohlenstoffatomen und insbesondere für einen Alkylrest mit 1 bis 3 Kohlenstoffatomen steht, speziell geeignet sind solche Reste der Formel B in denen R für Methyl steht und ganz speziell in denen alle R den gleichen Rest darstellen, steht,
und k für eine ganze Zahl zwischen 1 und 4000, bevorzugt zwischen 2 und 2000 besonders bevorzugt zwischen 2 und 1000 und ganz besonders bevorzugt zwischen 2 und 500 und insbesondere bevorzugt zwischen 2 und 300 steht, o für Zahlen zwischen 1 und 4000, bevorzugt zwischen 1 und 2000 besonders bevorzugt zwischen 1 und 1000 und ganz besonders bevorzugt zwischen 1 und 500 und insbesondere bevorzugt zwischen 1 und 300 steht, und m für eine Bruchzahl z/o und n für eine Bruchzahl (o-z)/o steht wobei z für Zahlen zwischen 1 und o steht.

Ganz besonders bevorzugte Struktureinheiten der erfindungsgemäßen linearen Polyformale bzw. Copolyformale leiten sich von allgemeinen Strukturen der Formeln (4a) und (4b) ab, 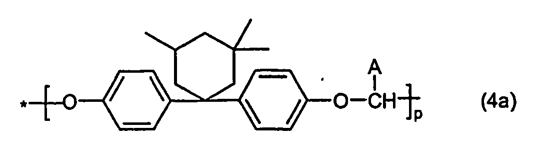 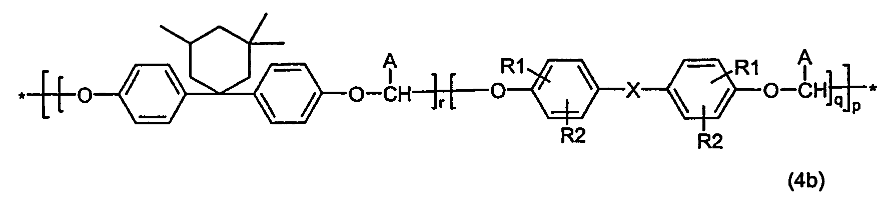 wobei der Ausdruck in der Klammer die Diphenolatreste beschreibt, in denen R1 und R2 unabhängig voneinander für H, lineare oder verzweigte C₁-C₁₈ Alkyl- oder Alkoxyreste, Halogen wie Cl oder Br oder für einen gegebenenfalls substituierten Aryl- oder Aralkylrest, bevorzugt für H oder lineare oder verzweigte C₁-C₁₂ Alkyl-, besonders bevorzugt für H oder C₁-C₈ Alkylreste und ganz besonders bevorzugt für H oder Methyl stehen, A für Wasserstoff oder Phenyl, bevorzugt für Wasserstoff steht,

X für eine Einfachbindung oder -SO₂-, -CO-, -S-, -O-, einen C1- bis C6-Alkylen-, bevorzugt C1 bis C3-Alkylen und besonders bevorzugt für einen Methylen-; für einen C2- bis C5-Alkyliden-, bevorzugt für C2 bis C3 Alkyliden-; für einen C5- bis C6-Cycloalkyliden-, bevorzugt einen Cyclohexylrest, der mit C1- bis C6-Alkyl, vorzugsweise Methyl- oder Ethylresten substituiert sein kann, oder einen C6- bis C12-Arylenrest, der ggfs. mit weiteren Heteroatome enthaltenden aromatischen Ringen kondensiert sein kann, steht, wobei p für eine ganze Zahl zwischen 1 und 4000, bevorzugt zwischen 2 und 2000 besonders bevorzugt zwischen 2 und 1000 und ganz besonders bevorzugt zwischen 2 und 500 und insbesondere zwischen 2 und 300 steht, und q für eine Bruchzahl z/p und r für eine Bruchzahl (p-z)/p steht wobei z für Zahlen zwischen 1 und p steht.

Ebenfalls besonders bevorzugt leiten sich die variablen Diphenolatreste in den Formeln (3) und (4) von den im folgenden noch genannten, geeigneten Diphenolen ab.

Beispielhaft werden für die Diphenole, die den allgemeinen Formeln (3) und (4) zugrundeliegen, Hydrochinon, Resorcin, Dihydroxybiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, 4,4'-Dihydroxydiphenylether, 3,3'-Dihydroxydiphenylether, 3,4'-Dihydroxydiphenylether, α,α'-Bis-(hydroxyphenyl)-diisopropylbenzole, sowie deren kernalkylierte und kernhalogenierte Verbindungen, und auch α,ω-Bis-(hydroxyphenyl)-polysiloxane genannt.

Bevorzugte Diphenole sind beispielsweise 4,4'-Dihydroxybiphenyl (DOD), 2,2-Bis-(4-hydroxyphenyl)-propan (Bisphenol A), 1,1-Bis-(4-hydroxyphenyl)-3,3,5-trimethylcyclohexan (Bisphenol TMC), 1,1-Bis-(4-hydroxyphenyl)-cyclohexan, 2,4-Bis-(4-hydroxyphenyl)-2-methylbutan, 1,1-Bis-(4-hydroxyphenyl)-1-phenylethan, 1,3-Bis-[2-(4-hydroxyphenyl)-2-propyl]benzol (Bisphenol M), 1,3-Bis[2-(4-hydroxyphenyl)-2-propyl]-benzol (Bisphenol M), 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 2,2-Bis-(3,5-dichlor-4-hydroxyphenyl)-propan und 2,2-Bis-(3,5-dibrom-4-hydroxyphenyl)-propan.

Besonders bevorzugte Diphenole sind beispielsweise 2,2-Bis-(4-hydroxyphenyl)-propan (Bisphenol A), 4,4'-Dihydroxybiphenyl (DOD), 1,3-Bis[2-(4-hydroxyphenyl)-2 propyl]-benzol (Bisphenol M), 2,2-Bis-(3,5-dimethyl-4-hydroxyphenyl)-propan, 1,1-Bis-(4-hydroxyphenyl)-1-phenylethan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Ganz besonders bevorzugt sind 2,2-Bis-(4-hydroxyphenyl)-propan (Bisphenol A), 4,4'-Dihydroxybiphenyl (DOD), 1,3-Bis[2-(4-hydroxyphenyl)-2-propyl]-benzol (Bisphenol M) und 1,1-Bis-(4-hydroxyphenyl)-3,3,5-trimethylcyclohexan (Bisphenol TMC).

Speziell bevorzugt werden 2,2-Bis-(4-hydroxyphenyl)-propan (Bisphenol A) und 1,1-Bis-(4-hydroxyphenyl)-3,3,5-trimethylcyclohexan (Bisphenol TMC).

Die Diphenole können sowohl allein als auch im Gemisch miteinander verwendet werden; es sind sowohl Homopolyformale als auch Copolyformale einbezogen. Die Diphenole sind literaturbekannt oder nach literaturbekannten Verfahren herstellbar (siehe z.B. H. J. Buysch et al., Ullmann's Encyclopedia of Industrial Chemistry, VCH, New York 1991, 5. Ed., Vol. 19, p. 348).

Gegenstand der vorliegenden Erfindung ist die Verwendung von linearen Polyformalen bzw. Copolyformalen der Formel (3a) und (3b) zur Herstellung von Produkten im Spritzguss- oder Extrusionsverfahren sowie zur Folienherstellung. Bevorzugt werden sie im Spritzguss- oder Extrusionsverfahren, besonders bevorzugt zur Herstellung von optischen Datenträger und Medizinartikeln verwendet.

Ebenfalls Gegenstand der vorliegenden Erfmdung sind die Polyformale und Copolyformale der Formeln 3a und 3b selbst.

Die vorliegende Erfindung betrifft weiterhin ein Verfahren zur Herstellung von Polyformalen und Copolyformalen der Formeln (3a) und (3b) dadurch gekennzeichnet, dass Bisphenole und Kettenabbrecher in einer homogenen Lösung aus Methylenchlorid oder alpha,alpha-Dichlortoluol und einem geeigneten hochsiedenden Lösungsmittel wie beispielsweise N-Methylpyrrolidon (NMP), Dimethylformamid (DMF), Dimethylsulfoxid (DMSO), N-Methylcaprolactam (NMC), Chlorbenzol, Dichlorbenzol, Trichlorbenzol oder Tetrahydrofuran (THF) in Gegenwart einer Base, bevorzugt Natriumhydroxid oder Kaliumhydroxid, bei Temperaturen zwischen 30 und 160°C zur Reaktion gebracht werden. Bevorzugte hochsiedende Lösungsmittel sind NMP, DMF, DMSO und NMC, besonders bevorzugt NMP, NMC, DMSO und ganz besonders bevorzugt NMP und NMC. Die Reaktionsführung kann auch mehrstufig erfolgen. Die gegebenenfalls notwendige Abtrennung der cyclischen Verunreinigungen erfolgt nach Neutralwäsche der organischen Phase durch einen Fällprozess in bzw. durch einen fraktionierten Knetprozess des Rohproduktes mit einem die cyclischen Verbindungen lösenden Lösungsmittel, z.B. Aceton. Die cyclischen Verunreinigungen lösen sich nahezu vollständig im Lösungsmittel und können durch portionsweises Kneten und Wechseln des Lösungsmittels fast vollständig abgetrennt werden. Durch Einsatz von bspw. ca. 10 Litern Aceton, welches in beispielsweise 5 Portionen zu einer Polyformalmenge von ca. 6 kg zugegeben wird kann ein Gehalt an Zyklen nach Kneten deutlich unter 1 % erreicht werden.

Die zyklischen Polyformale und Copolyformale können auch durch einen Fällprozess in geeignete Lösungsmittel, die als Nichtlöser für das gewünschte Polymer und als Löser für die unerwünschten Zyklen fungieren, abgetrennt werden. Bevorzugt handelt es sich hierbei um Alkohole oder Ketone.

Unter Bisphenolen sind die o. g. Diphenole zu verstehen. Bei dem zweiten Reaktanden handelt es sich beispielsweise um Methylenchlorid oder alpha,alpha-Dichlortoluol.

Die Reaktionstemperatur beträgt 30°C bis 160°C, bevorzugt 40°C bis 100°C besonders bevorzugt 50°C bis 80°C und ganz besonders bevorzugt 60°C bis 80°C.

Die Molekulargewichte Mw der erfindungsgemäßen verzweigten Polyformale und Copolyformale liegen im Bereich von 600 bis 1000000g/mol, bevorzugt zwischen 600 und 500000 g/mol besonders bevorzugt zwischen 600 und 250000g/mol und ganz besonders bevorzugt zwischen 600 und 120000 g/mol und insbesondere zwischen 600 und 80000 g/mol (bestimmt mittels GPC und Polycarbonateichung).

Bevorzugt, besonders bevorzugt oder ganz besonders bevorzugt sind Ausführungsformen, welche von den unter bevorzugt, besonders bevorzugt oder ganz besonders bevorzugt bzw., vorzugsweise etc. genannten Parametern, Verbindungen, Definitionen und Erläuterungen Gebrauch machen.

Die in der Beschreibung aufgeführten allgemeinen oder in Vorzugsbereichen aufgeführten Definitionen, Parameter, Verbindungen und Erläuterungen können jedoch auch untereinander, also zwischen den jeweiligen Bereichen und Vorzugsbereichen beliebig kombiniert werden.

Die erfindungsgemäßen Polyformale und Copolyformale können in bekannter Weise aufgearbeitet und zu beliebigen Formkörpern verarbeitet werden, beispielsweise durch Extrusion oder Spritzguss. Auch die Herstellung von Lösungs- oder Extrusionsfolien ist möglich.

Den erfindungsgemäßen Polyformale und Copolyformale können noch andere Polymere wie bspw. aromatische Polycarbonate und/oder andere aromatische Polyestercarbonate und/oder andere aromatische Polyester in bekannter Weise zugemischt werden.

Den erfindungsgemäßen Polyformalen und Copolyformalen können noch die für Thermoplasten üblichen Additive wie Füllstoffe, UV-Stabilisatoren, Thermostabilisatoren, Antistatika und Pigmente oder Farbmittel in den üblichen Mengen zugesetzt werden; gegebenenfalls können das Entformungsverhalten, das Fließverhalten, und/oder die Flammwidrigkeit noch durch Zusatz externer Formtrennmittel wie Glycerinmonostearat (GMS), PETS oder Fettsäureester Fließmittel, und/oder Flammschutzmittel verbessert werden (z.B. Alkyl- und Arylphosphite, -phosphate, -phosphane, niedermolekulare Carbonsäureester, Halogenverbindungen, Salze, Kreide, Quarzmehl, Glas- und Kohlenstofffasem, PTFE oder PTFE-haltige Blends, Pigmente und deren Kombination. Solche Verbindungen werden z.B. in WO 99/55772, S. 15 - 25, und in den entsprechenden Kapiteln des "Plastics Additives Handbook", ed. Hans Zweifel, 5th Edition 2000, Hanser Publishers, Munich. beschrieben).

Die erfindungsgemäßen Polyformale und Copolyformale, gegebenenfalls in Abmischung mit anderen Thermoplasten und/oder üblichen Additiven, können, zu beliebigen Formkörpern/Extrudaten verarbeitet, überall dort eingesetzt werden, wo bereits bekannte Polycarbonate, Polyestercarbonate und Polyester eingesetzt werden. Aufgrund ihres Eigenschaftsprofils eignen sie sich insbesondere als Substratmaterialien für optische Datenspeicher wie z.B. CD, CD-R, DVD, DVD-R, Blu-ray Disc (BD) oder Advanced Optical Disc (AOD) sowie near-field.optic.

Ein weiterer geeigneter Einsatzbereich ist durch die außergewöhnlich gute Hydrolsysebeständigkeit in Form von Medizinartikeln, welche häufig heißdampfsterilisiert werden gegeben. Solche Artikel sind beispielsweise, Dialysatoren, Kardiotomiegefaße, Oxygenatorengehäuse, Platten- und Hohlfaserdialysatoren, Separatorengehäuse, Injektionssysteme, Inhaliergeräte, Schlauchverbinder, Dreiwegehähne, Injektionszwischenstücke und andere Komponenten.

### Weitere Beispiele für die Verwendung der erfindungsgemäßen Polyformale sind:

Sicherheitsscheiben, die bekanntlich in vielen Bereichen von Gebäuden, Fahrzeugen und Flugzeugen erforderlich sind, sowie als Visiere von Helmen.
1. Herstellung von Folien, z.B. Skifolien.
2. Herstellung von lichtdurchlässigen Platten, insbesondere von Hohlkammerplatten, beispielsweise zum Abdecken von Gebäuden wie Bahnhöfen, Gewächshäusern und Beleuchtungsanlagen.
3. Herstellung optischer Datenspeicher.
4. Zur Herstellung von Ampelgehäusen oder Verkehrsschildern.
5. Zur Herstellung von Schaumstoffen (siehe beispielsweise DE-B 1 031 507).
6. Zur Herstellung von Fäden und Drähten (siehe beispielsweise DE-B 1 137 167 und DE-A 1 785 137).
7. Als transluzente Kunststoffe mit einem Gehalt an Glasfasern für lichttechnische Zwecke (siehe beispielsweise DE-A 1 554 020).
8. Als transluzente Kunststoffe mit einem Gehalt an Bariumsulfat, Titandioxid und oder Zirkoniumoxid bzw. organischen polymeren Acrylatkautschuken (EP-A 634 445, EP-A 269324) zur Herstellung von lichtdurchlässigen und lichtstreuenden Formteilen.
9. Zur Herstellung von Präzisionsspritzgussteilchen, wie beispielsweise Linsenhalterungen. Hierzu verwendet man Polyformale mit einem Gehalt an Glasfasern, die gegebenenfalls zusätzlich etwa 1 - 10 Gew.-% MoS₂, bezogen auf Gesamtgewicht, enthalten.
10. Zur Herstellung optischer Geräteteile, insbesondere Linsen für Foto- und Filmkameras (siehe beispielsweise DE-A 2 701 173).
11. Als Lichtübertragungsträger, insbesondere als Lichtleiterkabel (siehe beispielsweise EP-A 0 089 801).
12. Als Elektroisolierstoffe für elektrische Leiter und für Steckergehäuse sowie Steckverbinder.
13. Herstellung von Mobiltelefongehäusen mit verbesserter Beständigkeit gegenüber Parfüm, Rasierwasser und Hautschweiß.
14. Network interface devices
15. Als Trägermaterial für organische Fotoleiter.
16. Zur Herstellung von Leuchten und Lampen wie Langfeldleuchten oder. Scheinwerferlampen, als sogenannte "head-lamps", Streulichtscheiben oder innere Linsen.
17. Für medizinische Anwendungen, z.B. Oxygenatoren, Dialysatoren.
18. Für Lebensmittelanwendungen, wie z.B. Flaschen, Geschirr und Schokoladenformen.
19. Für Anwendungen im Automobilbereich, wo Kontakt zu Kraftstoffen und Schmiermitteln auftreten kann, wie beispielsweise Stoßfänger ggf. in Form geeigneter Blends mit ABS oder geeigneten Kautschuken.
20. Für Sportartikel, wie z.B. Slalomstangen oder Skischuhschnallen.
21. Für Haushaltsartikel, wie z.B. Küchenspülen und Briefkastengehäuse.
22. Für Gehäuse, wie z.B. Elektroverteilerschränke.
23. Gehäuse für Elektrozahnbürsten und Föngehäuse
24. Transparente Waschmaschinen - Bullaugen mit verbesserter Beständigkeit gegenüber der Waschlösung.
25. Schutzbrillen, optische Korrekturbrillen.
26. Lampenabdeckungen für Kücheneinrichtungen mit verbesserter Beständigkeit gegenüber Küchendunst insbesondere Öldämpfen.
27. Verpackungsfolien für Arzneimittel.
28. Chip-Boxen und Chip-Träger
29. Für sonstige Anwendungen, wie z.B. Stallmasttüren oder Tierkäfige.

Die Formkörper und optischen Datenspeicher aus den erfindungsgemäßen Polymeren sind ebenfalls Gegenstand dieser Anmeldung.

Die nachfolgenden Beispiele sollen die Erfindung illustrieren ohne sie jedoch einzuschränken.

### Beispiele

### Beispiel 1

Synthese des Homopolyformals aus Bisphenol TMC:

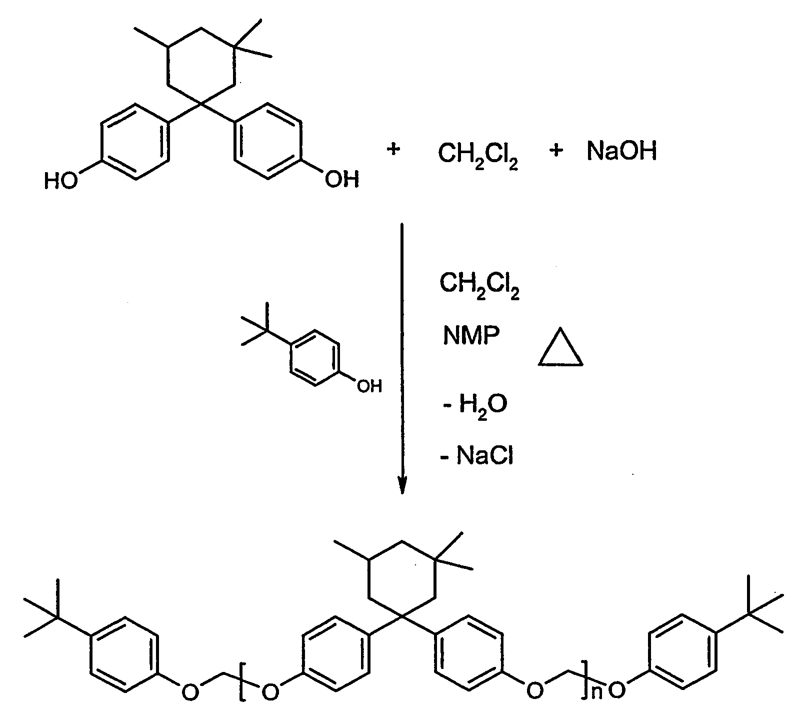

7 kg (22,55 mol) Bisphenol TMC, 2,255 kg (56,38 mol) Natriumhydroxid-Plätzchen und 51,07 g (0,34 mol) fein gemörsertes p-tert-Butylphenol (Aldrich) in 500 ml Methylenchlorid werden zu einem Lösungsmittelgemisch aus 28,7 kg Methylenchlorid und 40,18 kg N-Methyl-2-pyrrolidon (NMP) unter Rühren und Stickstoffschutzgas hinzugegeben. Nach Homogenisierung wird auf Rückfluss (78°C) aufgeheizt und eine Stunde lang bei dieser Temperatur gerührt. Nach dem Abkühlen bis auf 25°C wird der Reaktionsansatz mit 35 1 Methylenchlorid und 20 1 entmineralisiertem Wasser verdünnt. In einem Separator wird der Ansatz mit Wasser neutral und salzfrei (Leitfähigkeit < 15 µS.cm⁻¹)gewaschen. Die organische Phase aus dem Separator wird abgetrennt und in einem Eindampfkessel der Lösungsmittelaustausch Methylenchlorid gegen Chlorbenzol vorgenommen. Anschließend erfolgt die Extrusion des Materials über einen Ausdampfextruder ZSK 32 bei einer Temperatur von 270°C mit abschließender Granulierung. Diese Syntheseprozedur wird 2-mal durchgeführt. Dabei erhält man nach dem Verwerfen von Vorlaufmaterial insgesamt 9,85 kg Polyformal als transparentes Granulat. Dieses enthält noch niedermolekulare Ringe als Verunreinigung. Das Material wird auf zwei Teile aufgeteilt und jeweils mit ca. 5 1 Aceton über Nacht angequollen. Die erhaltenen Massen werden mit mehreren Portionen frischem Aceton solange geknetet, bis keine Ringe mehr nachgewiesen werden können. Nach Vereinigen des aufgereinigten Materials und Auflösen in Chlorbenzol wird nochmals bei 280°C über den Ausdampfextruder extrudiert. Dabei erhält man nach dem Verwerfen von Vorlaufmaterial insgesamt 7,31 kg Polyformal als transparentes Granulat.

### Analytik:

- Molekulargewicht Mw = 38345, Mn = 20138, D = 1,90 nach GPC (Eichung gegen Polycarbonat).
- Glastemperatur Tg = 170°C
- Relative Lösungsviskosität in Methylenchlorid (0,5 g/100 ml Lösung) = 1,234

### Beispiel 2 (Vergleich)

### Homopolyformal aus Bisphenol A:

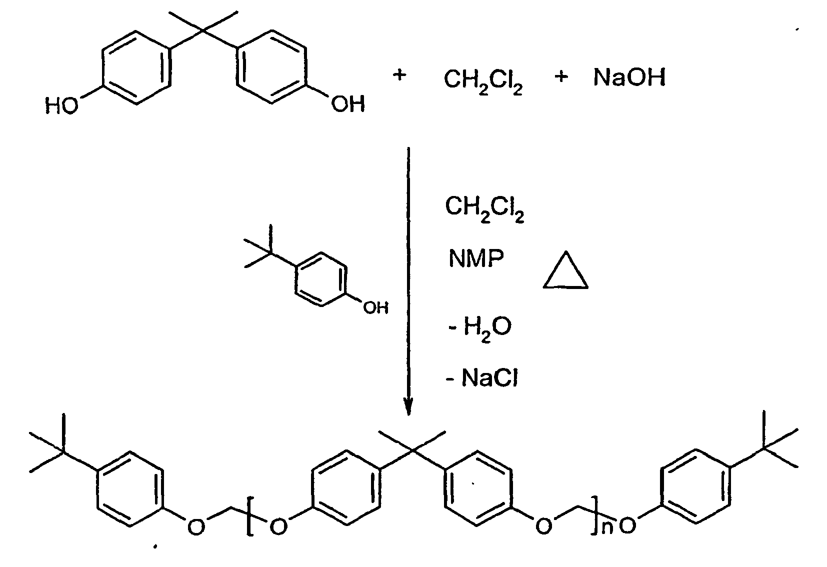

7 kg (30,66 mol) Bisphenol A (Bayer AG), 3,066 kg (76,65 mol) Natriumhydroxid-Plätzchen und 69,4 g (0,462 mol) fein gemörsertes p-tert-Butylphenol (Aldrich) in 500 ml Methylenchlorid werden zu einem Lösungsmittelgemisch aus 28,7 kg Methylenchlorid und 40,18 kg N-Methyl-2-pyrrolidon (NMP) unter Rühren und Stickstoffschutzgas hinzugegeben. Nach Homogenisierung wird auf Rückfluss (78°C) aufgeheizt und eine Stunde lang bei dieser Temperatur gerührt. Nach dem Abkühlen bis auf 25°C wird der Reaktionsansatz mit 20 1 Methylenchlorid und 20 1 entmineralisiertem Wasser verdünnt. In einem Separator wird der Ansatz mit Wasser neutral und salzfrei (Leitfähigkeit < 15 µS.cm⁻¹)gewaschen. Die organische Phase aus dem Separator wird abgetrennt und in einem Eindampfkessel der Lösungsmittelaustausch Methylenchlorid gegen Chlorbenzol vorgenommen. Anschließend erfolgt die Extrusion des Materials über einen Ausdampfextruder ZSK 32 bei einer Temperatur von 200°C mit abschließender Granulierung. Diese Syntheseprozedur wird 2-mal durchgeführt. Dabei erhält man nach dem Verwerfen von Vorlaufmaterial insgesamt 11,99 kg Polyformal als transparentes Granulat.

### Analytik:

- Molekulargewicht Mw = 31732, Mn = 3465 nach GPC (Eichung gegen Polycarbonat). Hierbei wurden die Zyklen nicht abgetrennt. Ein Anquellen des Materials mit Aceton ist nicht möglich, wodurch das Abtrennen der Zyklen ebenfalls nicht möglich ist.
- Glastemperatur Tg = 89°C
- Relative Lösungsviskosität in Methylenchlorid (0,5 g/100 ml Lösung) = 1,237

### Beispiel 3

### Synthese des Copolyformals aus Bisphenol TMC und Bisphenol A

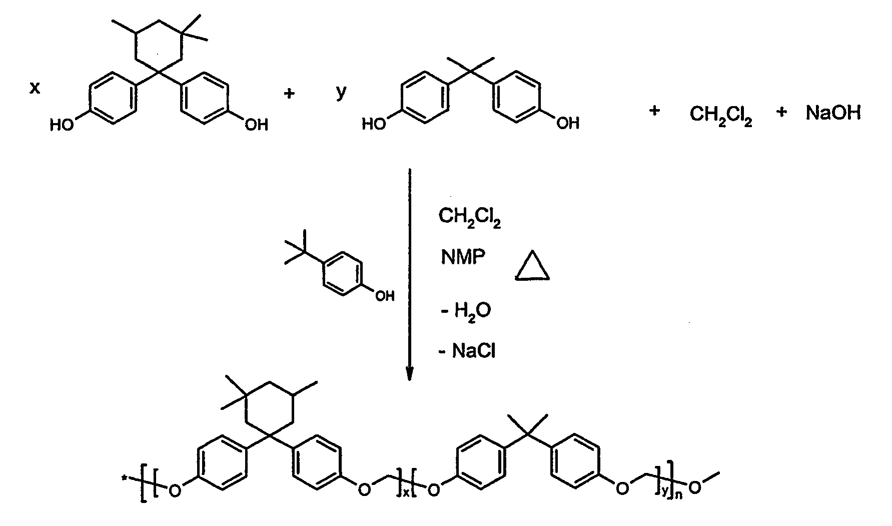

5,432 kg (17,5 mol) Bisphenol TMC (x=70 mol-%), 1,712 kg (7,5 mol) Bisphenol A (y=30 mol-%), 2,5 kg (62,5 mol) Natriumhydroxid-Plätzchen und 56,33 g (0,375 mol) fein gemörsertes p-tert-Butylphenol (Aldrich) in 500 ml Methylenchlorid werden zu einem Lösungsmittelgemisch aus 28,7 kg Methylenchlorid und 40,18 kg N-Methyl-2-pyrrolidon (NMP) unter Rühren und Stickstoffschutzgas hinzugegeben. Nach Homogenisierung wird auf Rückfluss (78°C) aufgeheizt und eine Stunde lang bei dieser Temperatur gerührt. Nach dem Abkühlen bis auf 25°C wird der Reaktionsansatz mit 35 1 Methylenchlorid und 20 1 entmineralisiertem Wasser verdünnt. In einem Separator wird der Ansatz mit Wasser neutral und salzfrei (Leitfähigkeit < 15 µS.cm⁻¹) gewaschen. Die organische Phase aus dem Separator wird abgetrennt und in einem Eindampfkessel der Lösungsmittelaustausch Methylenchlorid gegen Chlorbenzol vorgenommen. Anschließend erfolgt die Extrusion des Materials über einen Ausdampfextruder ZSK 32 bei einer Temperatur von 280°C mit abschließender Granulierung. Dabei erhält man nach dem Verwerfen von Vorlaufmaterial insgesamt 5,14 kg Copolyformal als transparentes Granulat. Dieses enthält noch niedermolekulare Ringe als Verunreinigung. Das Material wird mit ca. 5 1 Aceton über Nacht angequollen. Die erhaltenen Masse wird mit mehreren Portionen frischem Aceton solange geknetet, bis keine Ringe mehr nachgewiesen werden können. Das aufgereinigte Material wird in Chlorbenzol aufgelöst und nochmals bei 270°C über den Ausdampfextruder extrudiert. Dabei erhält man nach dem Verwerfen von Vorlaufmaterial 3,11 kg Polyformal als transparentes Granulat.

### Analytik:

- Molekulargewicht Mw = 39901, Mn = 19538, D = 2,04 nach GPC (Eichung gegen Polycarbonat).
- Glastemperatur Tg = 148°C
- Relative Lösungsviskosität in Methylenchlorid (0,5 g/100 ml Lösung) = 1,246
- ¹H-NMR in CDCl₃ zeigt das erwartet Einbauverhältnis x/y

### Beispiele 4 - 11

Synthese von Copolyformalen aus Bisphenol TMC und Bisphenol A mit variabler Zusammensetzung.

Analog der Synthese in Beispiel 3 werden weitere Copolyformale hergestellt (siehe. Tabelle 1)

| Beispiel-Nr. | TMC [mol-%] | BPA [mol-%] | Tg [°C] |
|---|---|---|---|
| 4 | 30 | 70 | 115 |
| 5 | 35 | 65 | 120 |
| 6 | 40 | 60 | 124 |
| 7 | 50 | 50 | 132 |
| 8 | 55 | 45 | 137 |
| 9 | 70 | 30 | 149 |
| 10 | 80 | 20 | 158 |
| 11 | 90 | 10 | 165 |

### Beispiel 12:

### Wassergehaltsbestimmung von Polyformalen und Copolyformalen

Wasseraufnahme und Wassergehaltsbestimmung von Polyformalen aus Beispiel 1-10 nach Lagerung im Feuchtklima 95 % r.F. und 30°C Lagertemperatur.

Der Wassergehalt wird nach verschiedenen Lagerzeiten mittels quantitativer Karl-Fischer Titration ( Coulometrische Titration ) bestimmt.

| | |
|---|---|
| Lagerzeiten: | 7 Tage und 14 Tage |
| Bewitterung: | Feuchtklima 95% r.F. und 30°C |
| Reproduzierung: | 4 Messungen je Lagerung |

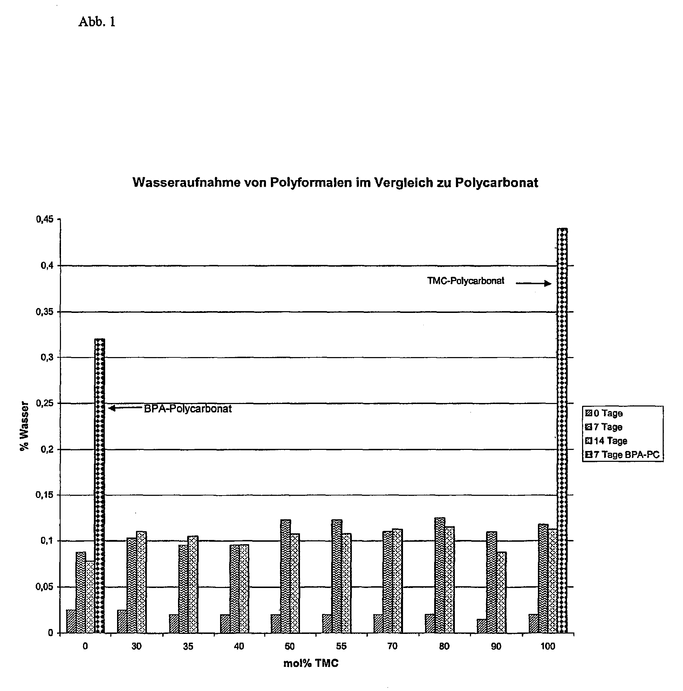

Die Mittelwerte der Wassergehalte sind in Abb.1 dargestellt.

Im Vergleich zu den Polycarbonaten mit 0 % TMC-Bisphenol (100 % Bisphenol A) und 100 % TMC-Bisphenol ist über den kompletten Konzentrationsbereich der Copolymerzusammensetzung der Polyformale bzw. Copolyformale die deutlich abgesenkte Wasseraufnahme zu erkennen.

### Beispiel 13

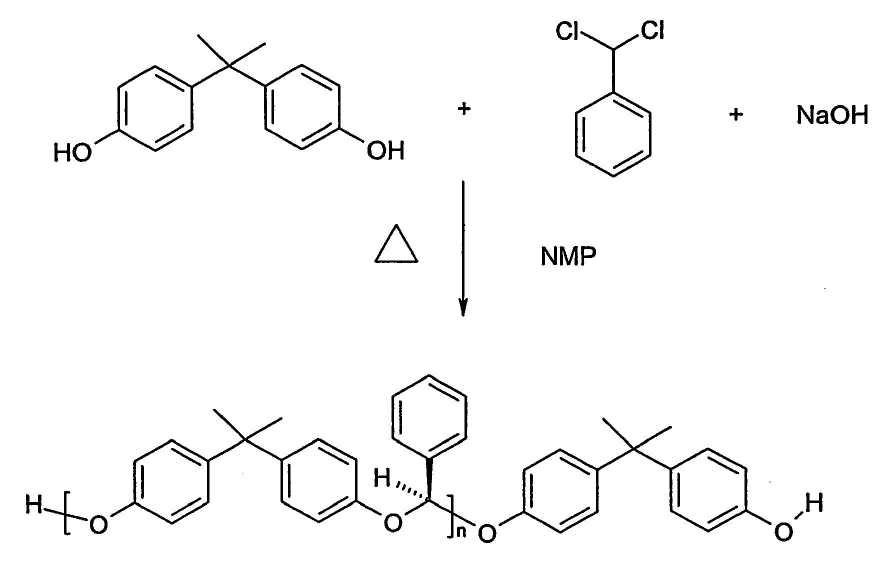

73,47 g (0,32 mol) Bisphenol A, 32,04 g (0,8 mol) Natriumhydroxid-Perlen werden unter Rühren und Stickstoff-Schutzgas zu einer Mischung aus 103,65 g (0,64 mol) α,α-Dichlortoluol (Aldrich) und 450 ml N-Methyl-2-pyrrolidon (NMP) gegeben. Nach der Homogenisierung erhitzt man die Mischung auf 78 - 83°C und rührt bei dieser Temperatur eine Stunde lang. Nach dem Abkühlen auf Raumtemperatur wird der Reaktionsansatz mit Methylenchlorid und Wasser verdünnt. Die organische Phase wird mehrmals mit mehreren Portionen Wasser neutral und salzfrei gewaschen. Die organische Phase wird anschließend abgetrennt. Das Polymer wird dann durch Fällung in Methanol isoliert. Nach dem Waschen mit Wasser und Methanol werden die cyclischen Oligomere mit heißen Aceton abgetrennt (mehrmaliges Waschen). Nach dem Trocknen bei 80°C erhält man 50 g des Polyformals.

### Analyse:

- Molekulargewicht Mw = 11162, Mn = 7146, D = 1,56 mittels GPC (Kalibrierung gegen Polycarbonat.
- Glastemperatur Tg = 115°C

### Beispiel 14

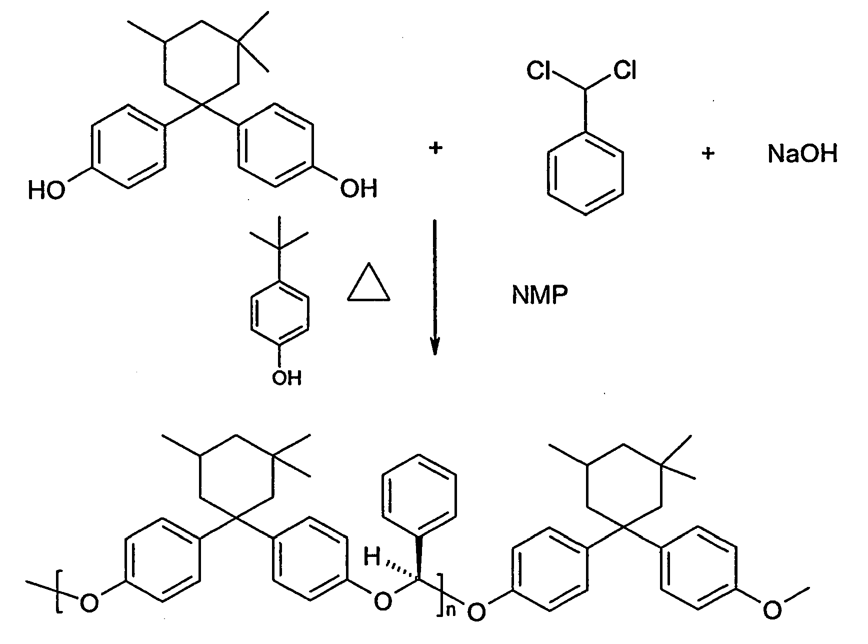

40,36 g (0,13 mol) Bisphenol TMC, 12,8 g (0,32 mol) Natriumhydroxid-Perlen und 0,195 g (0,0013 mol) p-tert.-Butylphenol werden unter Rühren und Stickstoff-Schutzgas zu einer Mischung aus 41,87 g (0,26 mol) α,α-Dichlortoluol (Aldrich) und 225 ml N-Methyl-2-pyrrolidon (NMP) gegeben. Nach der Homogenisierung erhitzt man die Mischung auf 77 - 81°C und rührt bei dieser Temperatur eine Stunde lang. Nach dem Abkühlen auf Raumtemperatur wird der Reaktionsansatz mit Methylenchlorid und Wasser verdünnt. Die organische Phase wird mehrmals mit mehreren Portionen Wasser neutral und salzfrei gewaschen. Die organische Phase wird anschließend abgetrennt. Das Polymer wird dann durch Fällung in Methanol isoliert. Nach dem Waschen mit Wasser und Methanol werden die cyclischen Oligomere mit heißen Aceton abgetrennt (mehrmaliges Waschen). Nach dem Trocknen bei 80°C erhält man 46,6 g des Polyformals.

### Analyse:

- Molekulargewicht Mw = 10644, Mn = 7400, D = 1,44 mittels GPC (Kalibrierung gegen Polycarbonat.
- Glastemperatur Tg = 158°C

## Patentansprüche

1. Lineare Polyformale bzw. Copolyformale der allgemeinen Formeln (3a) und (3b), 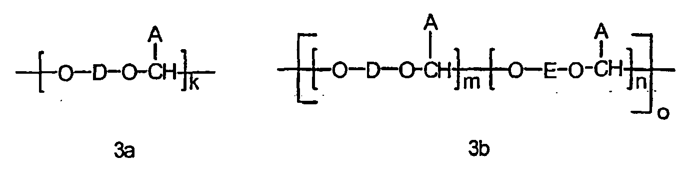 worin A unabhängig für Wasserstoff oder Phenyl steht, die Reste O-D-O und O-E-O für beliebige Diphenolatreste stehen, in denen -E- und -D- unabhängig voneinander ein aromatischer Rest mit 6 bis 40 C-Atomen ist, der einen oder mehrere aromatische oder kondensierte, ggf Heteroatome enthaltende aromatische Kerne enthalten kann und ggf. mit C₁-C₁₂-Alkylresten oder Halogen substituiert ist und aliphatische Reste, cycloaliphatische Reste, aromatische Kerne oder Heteroatome als Brückenglieder enthalten kann, wobei mindestens einer der Reste O-D-O und O-E-O für einen entsprechend, mindestens einfach am Cyclohexanring substituierten 1,1-Bis-(4-hydroxyphenyl)-cyclohexan Rest der Formel B steht, 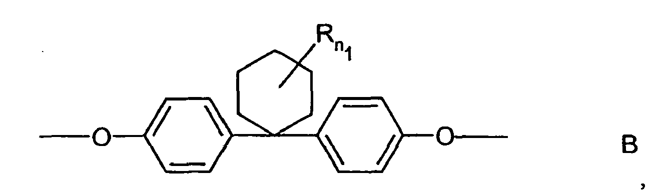 worin n₁ = 1 bis 10 bedeutet und R unabhängig voneinander für Alkyl, Alkenyl, Aryl oder Halogen steht, und in denen k und o für eine ganze Zahl zwischen 1 und 4000 steht, o für Zahlen zwischen 1 und 4000 steht und m für eine Bruchzahl z/o und n für eine Bruchzahl (o-z)/o steht wobei z für Zahlen zwischen 1 und o steht.

2. Lineare Polyformale bzw. Copolyformale gemäß Anspruch 1, worin A für Wasserstoff

3. Lineare Polyformale bzw. Copolyformale gemäß Anspruch 1, worin R für Alkyl mit 1 bis 3 Kohlenstoffatomen steht.

4. Verwendung der Polyformale und Copolyformale gemäß Anspruch 1 zur Herstellung von Produkten im Spritzgussverfahren oder Extrusionsverfahren.

5. Verwendung gemäß Anspruch 4, **dadurch gekennzeichnet, dass** das Produkt ein Optischer Datenspeicher ist.

6. Optische Datenspeicher enthaltend die Polyformale und/oder Copolyformale gemäß Anspruch 1.

7. Verwendung gemäß Anspruch 4, **dadurch gekennzeichnet, dass** das Produkt ein Medizinartikel ist.

8. Medizinartikel enthaltend die Polyformale und/oder Copolyformale gemäß Anspruch 1.

9. Lineare Polyformale gemäß Anspruch 1, **dadurch gekennzeichnet, dass** es sich um ein Homopolyformal auf Basis von 1,1-Bis-(4-hydroxyphenyl)-3,3,5-trimethylcyclohexan (Bisphenol TMC) handelt.

10. Verfahren zur Herstellung der linearen Polyformale und Copolyformale gemäß Anspruch 1 durch Umsetzung von Bisphenolen mit Methylenchlorid in einer homogenen Lösung in einem geeigneten hochsiedenden Lösungsmittel in Gegenwart einer Base, bei Temperaturen zwischen 30 und 160°C.

## Claims

1. Linear polyformals or copolyformals of the general formulae (3a) and (3b), 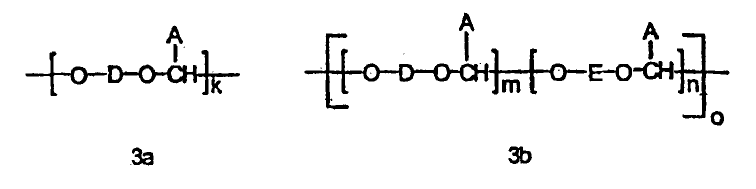 in which A independently denotes hydrogen or phenyl, the residues O-D-O and O-E-O denote any desired diphenolate residues, in which -E- and -D- are mutually independently an aromatic residue with 6 to 40 C atoms, which residue may contain one or more aromatic or fused aromatic nuclei optionally containing heteroatoms and is optionally substituted with C₁-C₁₂ alkyl residues or halogen and may contain aliphatic residues, cycloaliphatic residues, aromatic nuclei or heteroatoms as bridging members, wherein at least one of the residues O-D-O and O-E-O denotes a corresponding 1,1-bis(4-hydroxyphenyl)cyclohexane residue, which is at least monosubstituted on the cyclohexane ring, of the formula B 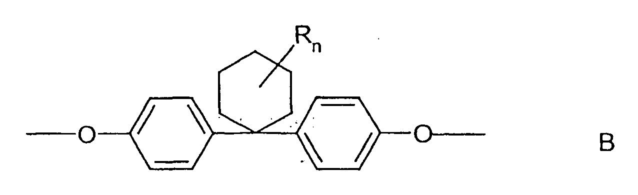 in which n means 1 to 10 and the instances of R mutually independently denote alkyl, alkenyl, aryl or halogen, and in which k and o denote an integer between 1 and 4000, o denotes numbers between 1 and 4000 and m denotes a fraction z/o and n a fraction (o-z)/o, wherein z denotes numbers between 1 and o.

2. Linear polyformals and copolyformals according to claim 1, wherein A denotes hydrogen.

3. Linear polyformals and copolyformals according to claim 1, wherein R denotes alkyl with 1 to 3 carbon atoms.

4. Use of the polyformals and copolyformals according to claim 1 for the production of products by the injection moulding or extrusion process.

5. Use according to claim 4, **characterised in that** the product is an optical data storage medium.

6. Optical data storage media containing the polyformals and/or copolyformals according to claim 1.

7. Use according to claim 4, **characterised in that** the product is a medical article.

8. Medical articles containing the polyformals and/or copolyformals according to claim 1.

9. Linear polyformals according to claim 1, **characterised in that** it comprises a homopolyformal based on 1,1-bis(4-hydroxyphenyl)-3,3,5-trimethylcyclohexane (bisphenol TMC).

10. A process for the production of the linear polyformals and copolyformals according to claim 1 by reacting bisphenols with methylene chloride in a homogeneous solution in a suitable high-boiling solvent in the presence of a base, at temperatures of between 30 and 160°C.

## Revendications

1. Polyformals ou copolyformals linéaires de formules générales (3a) et (3b), 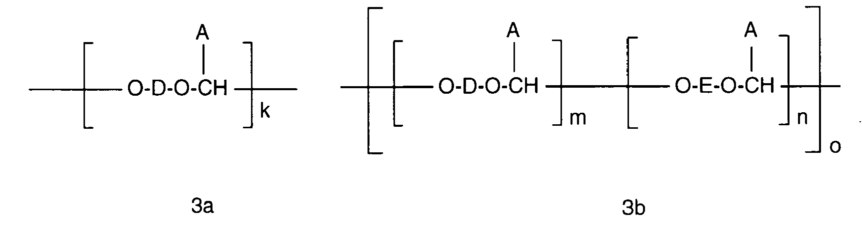 où A représente indépendamment l'hydrogène ou phényle, les groupements O-D-O et O-E-O représentent des groupements diphénol quelconques dans lesquels -E- et -D- représentent indépendamment l'un de l'autre un groupement aromatique à 6 à 40 atomes C, qui peut contenir un ou plusieurs noyaux aromatiques ou aromatiques condensés, contenant éventuellement des hétéroatomes et qui est éventuellement substitué avec des groupements C₁-C₁₂-alkyle ou halogène et qui peut contenir des groupements aliphatiques, des groupements cycloaliphatiques, des noyaux aromatiques ou des hétéroatomes comme membres de ponts, où au moins l'un des groupements O-D-O et O-E-O représente un groupement 1,1-bis-(4-hydroxyphényl)-cyclohexane, substitué de manière correspondante au moins une fois sur le cycle cyclohexane de formule B : 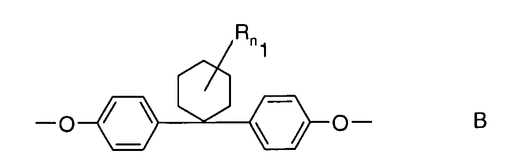 où n₁ = 1 à 10 et les R représentent indépendamment les uns des autres alkyle, alcényle, aryle ou halogène, et dans lesquels k et o représentent un nombre entier entre 1 et 4 000, o représente des nombres entre 1 et 4 000 et m représente un nombre fractionnaire z/o et n représente un nombre fractionnaire (o-z)/o où z représente des nombres entre 1 et o.

2. Polyformals ou copolyformals linéaires selon la revendication 1 où A représente l'hydrogène.

3. Polyformals ou copolyformals linéaires selon la revendication 1 où R représente alkyle à 1 à 3 atomes de carbone.

4. Utilisation des polyformals et copolyformals selon la revendication 1 pour la production de produits dans le procédé de moulage par injection ou le procédé d'extrusion.

5. Utilisation selon la revendication 4 **caractérisée en ce que** le produit est une mémoire d'informations optique.

6. Mémoire d'informations optique contenant les polyformals et/ou copolyformals selon la revendication 1.

7. Utilisation selon la revendication 4 **caractérisée en ce que** le produit est un article médical.

8. Article médical contenant les polyformals et/ou copolyformals selon la revendication 1.

9. Polyformals linéaires selon la revendication 1, **caractérisés en ce qu'**il s'agit d'un homopolyformal à base de 1,1-bis-(4-hydroxyphényl)-3,3,5-triméthylcyclohexane (bisphénol TMC).

10. Procédé de production des polyformals et copolyformals linéaires selon la revendication 1 par réaction de bisphénols avec le chlorure de méthylène dans une solution homogène dans un solvant à haut point d'ébullition approprié en présence d'une base, à des températures entre 30 et 160°C.
